# FASCICULE DE BREVET EUROPEEN

(11) **EP 0 581 973 B1**
(45) Date de publication et mention de la délivrance du brevet: **14.08.1996**
(21) Numéro de dépôt: 92110950.0
(22) Date de dépôt: 29.06.1992
(51) Int. Cl.: A23L 1/01, A23L 1/187, H05B 6/80

(54) **Procédé de fabrication de flan caramel utilisant les micro-ondes**
Verfahren zur Herstellung von karamelle Eiercreme mit Hilfe von Mikrowellen
Process for making caramel custard using microwaves

(43) Date de publication de la demande: 09.02.1994
(73) Titulaire: SOCIETE DES PRODUITS NESTLE S.A., CH-1800 Vevey (CH)
(72) Inventeur: Le Viet, Toai, CH-1800 Vevey (CH)

(56) Documents cités:
- EP-A- 0 350 564
- EP-A- 0 354 277
- FR-A- 2 443 205
- US-A- 4 168 418
- DATABASE WPIL Section Ch, Week 9037, 1990 Derwent Publications Ltd., London, GB; Class D11, AN 90-275364

## Description

L'invention concerne un procédé de fabrication de flan caramel.

Le brevet AU 4710089 concerne un conteneur à deux constituants comportant une protection de l'un des constituants pour le réchauffage dans un champ micro-ondes. Le brevet US 4168418 concerne un dispositif à micro-ondes permettant d'éliminer la graisse et l'eau d'une viande. Le brevet FR 2443205 concerne un four à rayonnement infra-rouge pour la cuisson rapide de pain. Aucun de ces documents ne concerne la fabrication de flan caramel.

Il est connu dans la technique de fabriquer des flans caramel avec des systèmes de chauffage classique, par exemple des plaques électriques fabriquées par la Société A.P.V. Dans ce cas, les flans passent dans un tunnel muni du chauffage précité et on dispose douze rangées de flans côte à côte. L'inconvénient de ce dispositif est qu'il nécessite une durée de cuisson élevée et donc un tunnel de grande longueur et d'autre part la réflexion de l'énergie sur les parois latérales du tunnel augmente trop la température des flans déposés près desdites parois, de sorte que le caramel arrive à ébullition et diffuse dans la masse de flan. Ce qui est totalement rédhibitoire et donne un nombre élevé de rejets.

Le but de la présente invention est de mettre à disposition du fabricant de flan caramel un procédé et un dispositif, dans lesquels on réduit le temps de coagulation (pour un système classique, il est de l'ordre de 16 à 18 min avec une temperature initiale de flan de l'ordre de 60°C) et on évite tout mélange entre le caramel et le flan au moment de la cuisson dudit flan.

L'invention concerne un procédé de fabrication de flan caramel dans lequel on soumet ledit flan à un champ micro-ondes de manière à ce qu'il ressorte à une température comprise entre 90 et 95°C et on protège le fond du flan pendant son passage dans le champ micro-ondes grâce à un matériau ne laissant pas passer l'énergie micro-ondes. Ce matériau est disposé sous le flan. La couche de caramel est au fond du récipient, la couche de mélange pour le flan étant par dessus. On a un effet de protection pour la raison suivante: l'énergie micro-onde arrivant par le haut pénètre en s'amortissant dans la masse de flan de manière à être minimale lorsqu'elle arrive sur la couche caramel. L'énergie micro-ondes arrivant par le bas est réfléchie par le matériau formant barrière. L'énergie micro-ondes arrivant à côté du flan est également réfléchie sur la couche barrière et l'addition de l'onde incidente et réfléchie donne un minimum au niveau du fond du récipient, là où se trouve la couche caramel. On arrive selon le procédé de l'invention à obtenir à la sortie du champ micro-ondes, un caramel étant à une température de l'ordre de 75°C, c'est-à-dire bien en dessous de la température d'ébullition. Le procédé selon l'invention permet en outre d'obtenir une bonne homogénéité de coagulation et une bonne régularité de la température finale.

On peut opérer la coagulation du flan soit à partir de flan liquide à 12°C soit à 60°C, c'est-à-dire après préchauffement par exemple par échangeur de chaleur. Avant de subir le traitement micro-ondes, les récipient sont remplis de caramel et de flan liquide à l'aide de systèmes de dosage connus dans l'état de la technique.

Pour un flan liquide entrant à 12°C, la durée de chauffage est de l'ordre de 6 min, pour un flan liquide entrant à 60°C la durée de chauffage est de l'ordre de 3 min.

Le matériau formant barrière micro-ondes peut être tout métal conducteur électrique, en particulier le fer, le cuivre ou l'aluminium. Si on privilégie l'aluminium ce sont pour des raisons de coût et de légéreté. Mais il est bien entendu que tout autre métal peut aussi être utilisable.

Compte-tenu des impratifs industriels, il faut arriver à des débits compris entre 2000 et 12000 pots/heure en disposant par exemple 6 rangées de pots passant dans le champ micro-ondes.

La vitesse de passage des flans dans le champ micro-ondes est comprise entre 1 et 3 m/min.

Le passage dans le champ micro-ondes ne donne pas un flan ferme à la sortie et permet seulement d'amorcer la coagulation. Il est donc intéressant de prévoir à la sortie du champ micro-ondes un passage des flans dans une zone d'énergie infrarouge. Ce passage permet d'une part de raffermir la masse et d'autre part d'obtenir un brunissement de la couche supérieure du flan (croûtage). Le passage dans la zone infrarouge dure entre 2 et 6 min, dépendant de la puissance des plaques électriques utilisées.

Le matériau ne laissant pas passer l'energie micro-ondes ayant la forme d'une plaque a une épaisseur comprise entre 1 et 5 mm. Comme cette plaque sert également de support à la bande transporteuse, il ne faut pas qu'elle soit trop mince. Il ne faut pas non plus qu'elle soit trop épaisse, car elle aurait tendance à chauffer inutilement et à transférer cette énergie à la couche caramel et à la bande transporteuse.

Le champ micro-ondes à une longeur comprise entre 6 et 9 m et une puissance comprise entre 20 et 90 KW.

Comme déjà mentionné ci-dessus, lorsque le flan caramel sort du tunnel micro-ondes, on continue la coagulation en le faisant passer dans une zone infra-rouge. A cet effet le dispositif utilisé pour la mise en oeuvre du procédé comprend en outre une bande transporteuse de passage dans une zone d'énergie infra-rouge. Cette zone a une puissance comprise entre 8 et 12 KW.

Le procédé selon l'invention permet de faire un flan caramel en une durée réduite par rapport à un système classique. Le dispositif utilisé pour la mise en oeuvre du procédé est de dimension assez réduite et travaillant à un débit compatible dans le domaine industriel.

La matière première pour flan caramel est la suivante :
on prend du caramel liquide du commerce et le flan liquide est préparé par mélange de lait écrémé, poudre de lait écrémé, sucre, eau et oeuf entier.

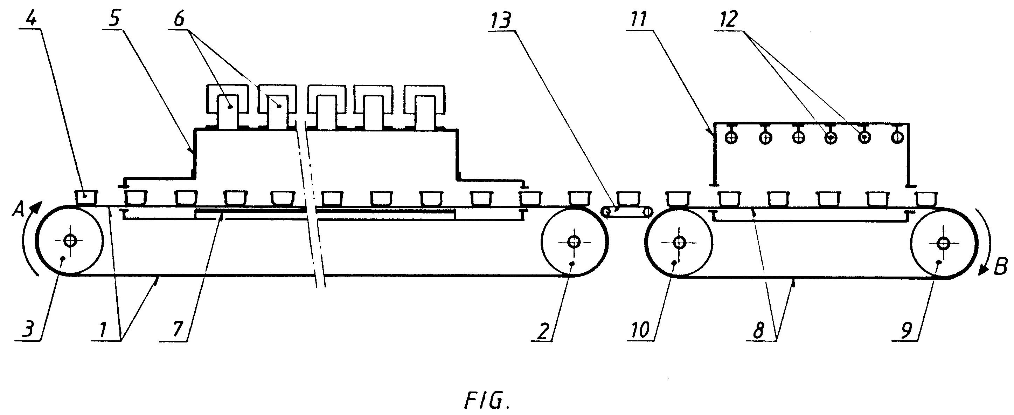

La suite de la description est faite en référence au dessin représentant schématiquement le dispositif pour la mise en oeuvre du procédé selon l'invention.

La bande transporteuse (1) supporte les récipients (4) contenant les flans caramels et avance selon la flèche A sur des rouleaux de renvoi (2, 3).

Les flans passent dans le tunnel micro-ondes (5) comportant 12 générateurs micro-ondes (6). Chaque générateur a une puissance de 6 KW. Les flans sont constitués de 5 g de caramel et 95 g de flan liquide.

Les flans entrent à une température de 60°C et sortent au bout de 2 min 40 à une température de 93°C. Le tunnel a une longueur de 8 m. La plaque métallique (7) servant de protection pour la couche caramel est en aluminium d'épaisseur 2 mm. En disposant 12 rangées de pots distants de 20 mm maximum, on arrive à un débit de 10-12000 flans à l'heure.

A la sortie du tunnel micro-ondes les récipients (4) passent de la bande transporteuse de liaison (13) à une bande transporteuse (8) avançant selon la flèche B sur des rouleaux de renvoi (9, 10) dans une zone d'énergie infra-rouge (11) comportant des éléments chauffants (12). L'énergie infra-rouge est de 9,6 KW.

Les flans séjournent 2 min dans l'énergie infra-rouge et sortent à une température de l'ordre de 98°C. Le caramel reste cependant à une température de 75°C. On arrive ainsi à bien raffermir le flan et à obtenir un brunissement de la partie supérieure du flan.

## Revendications

1. Procédé de fabrication de flan caramel disposé dans un récipient, la couche de caramel étant au fond du récipient et la couche de mélange pour le flan par-dessus, caractérisé en ce qu'on soumet ledit flan à un champ micro-ondes de manière à ce qu'il en ressorte à une température comprise entre 90 et 95°C et en ce qu'on protège le fond du flan pendant son passage dans le champ micro-ondes grâce à un matériau ne laissant pas passer l'énergie micro-ondes.

2. Procédé selon la revendication 1 caractérisé en ce que le flan entre dans le champ micro-ondes à une température comprise entre 10 et 60°C.

3. Procédé selon l'une des revendications 1 ou 2, caractérisé en ce que le matériau ne laissant pas passer l'énergie micro-ondes est un métal choisi parmi le fer, le cuivre et l'aluminium.

4. Procédé selon l'une des revendications 1 à 3 , caractérisé en ce que le flan traverse le champ micro-ondes à une vitesse comprise entre 1 et 3 m/min.

5. Procédé selon l'une des revendications 1 à 4, caractérisé en ce que le flan est soumis à sa sortie du champ micro-ondes à une énergie infrarouge.

6. Procédé selon l'une des revendications 1 à 5, caractérisé en ce qu'on produit entre 2000 et 12000 flans/heure.

7. Procédé selon l'une quelconque des revendications 1 à 6, caractérisé en ce que le flan est dans le champ micro-ondes pendant 3 à 6 minutes et est soumis à l'énergie infrarouge pendant 2 à 6 minutes.

8. Procédé selon l'une des revendications 1 à 7, caractérisé en ce que le matériau ne laissant pas passer l'énergie micro-ondes a une épaisseur comprise entre 1 et 5 mm.

9. Procédé selon l'une des revendications 1 à 8, caractérisé en ce que le champ micro-ondes a une longueur comprise entre 6 et 9 m.

10. Procédé selon l'une des revendications 1 à 9, caractérisé en ce que le champ micro-ondes a une puissance comprise entre 20 et 90 KW.

11. Procédé selon la revendication 5, caractérisé en ce que la zone d'énergie infrarouge a une puissance comprise entre 8 et 12 KW.

## Claims

1. Process for producing a caramel custard disposed in a container, the layer of caramel being at the bottom of the container and the layer of mixture for the custard above, characterized in that the said custard is subjected to a microwave field so that it leaves at a temperature of between 90 and 95°C and in that the base of the custard is protected during its passage through the microwave field by means of a material which is impermeable to microwave energy.

2. Process according to claim 1, characterized in that the custard enters the microwave field at a temperature of 10 to 60°C.

3. Process according to claim 1 or 2, characterized in that the material impermeable to microwaves is a metal selected from iron, copper and aluminium.

4. Process according to one of claims 1 to 3, characterized in that the custard passes through the microwave field at a rate of 1 to 3 m/min.

5. Process according to one of claims 1 to 4, characterized in that the custard is subjected to infrared energy on leaving the microwave field.

6. Process according to one of claims 1 to 5, characterized in that between 2,000 and 12,000 custards are produced per hour.

7. Process according to any one of claims 1 to 6, characterized in that the custard remains in the microwave field for 3 to 6 minutes and is subjected to infrared energy for 2 to 6 minutes.

8. Process according to one of claims 1 to 7, characterized in that the material impermeable to microwaves has a thickness of between 1 and 5 mm.

9. Process according to one of claims 1 to 8, characterized in that the microwave field is between 6 and 9 metres in length.

10. Process according to one of claims 1 to 9, characterized in that the microwave field has a power of between 20 and 90 kw.

11. Process according to claim 5, characterized in that the infrared energy zone has a power of between 8 and 12 kw.

## Patentansprüche

1. Verfahren zur Herstellung von in einem Behälter angeordnetem Karamelpudding, wobei sich die Karamelschicht am Boden des Behälters und die Schicht der Puddingmischung darüber befindet, dadurch gekennzeichnet, daß man diesen Pudding einem Mikrowellenfeld so aussetzt, daß er aus diesem mit einer Temperatur zwischen 90 und 95°C austritt, und daß man den Boden des Puddings während seines Durchgangs durch das Mikrowellenfeld durch einen die Mikrowellenergie nicht durchlassenden Werkstoff schützt.

2. Verfahren nach Anspruch 1, dadurch gekennzeichnet, daß der Pudding in das Mikrowellenfeld mit einer Temperatur zwischen 10 und 60°C eintritt.

3. Verfahren nach einem der Ansprüche 1 oder 2, dadurch gekennzeichnet, daß der die Mikrowellenergie nicht durchlassenden Werkstoff ein Metall ist, das aus Eisen, Kupfer und Aluminium ausgewählt ist.

4. Verfahren nach einem der Ansprüche 1 bis 3, dadurch gekennzeichnet, daß der Pudding das Mikrowellenfeld mit einer Geschwindigkeit zwischen 1 und 3 m/min durchquert.

5. Verfahren nach einem der Ansprüche 1 bis 4, dadurch gekennzeichnet, daß der Pudding bei seinem Austritt aus dem Mikrowellenfeld einer Infrarotenergie ausgesetzt wird.

6. Verfahren nach einem der Ansprüche 1 bis 5, dadurch gekennzeichnet, daß man zwischen 2000 und 12000 Puddings pro Stunde erzeugt.

7. Verfahren nach einem der Ansprüche 1 bis 6, dadurch gekennzeichnet, daß der Pudding in dem Mikrowellenfeld 3 bis 6 Minuten verweilt und der Infrarotenergie 2 bis 6 Minuten ausgesetzt ist.

8. Verfahren nach einem der Ansprüche 1 bis 7, dadurch gekennzeichnet, daß der die Mikrowellenergie nicht durchlassende: Werkstoff eine Dicke zwischen 1 und 5 mm hat.

9. Verfahren nach einem der Ansprüche 1 bis 8, dadurch gekennzeichnet, daß das Mikrowellenfeld eine Länge zwischen 6 und 9 m hat.

10. Verfahren nach einem der Ansprüche 1 bis 9, dadurch gekennzeichnet, daß das Mikrowellenfeld eine Leistung zwischen 20 und 90 kW hat.

11. Verfahren nach Anspruch 5, dadurch gekennzeichnet, daß die Infrarotenergiezone eine Leistung zwischen 8 und 12 KW hat.
